# EUROPÄISCHE PATENTSCHRIFT

(11) **EP 2 461 934 B1**
(45) Veröffentlichungstag und Bekanntmachung des Hinweises auf die Patenterteilung: **20.07.2016**
(21) Anmeldenummer: 10773249.7
(22) Anmeldetag: 19.10.2010
(51) Int. Cl.: B23H 3/04, B23H 3/06, B23H 5/10

(54) **VERFAHREN ZUM HERSTELLEN EINER ELEKTRODE UND KORRESPONDIERENDE ELEKTRODE**
METHOD FOR PRODUCING AN ELECTRODE, AND CORRESPONDING ELECTRODE
PROCÉDÉ DE FABRICATION D'UNE ÉLECTRODE ET ÉLECTRODE CORRESPONDANTE

(30) Priorität: 19.10.2009 DE 102009049811
(43) Veröffentlichungstag der Anmeldung: 13.06.2012
(73) Patentinhaber: Admedes Schuessler GmbH, 75179 Pforzheim (DE)
(72) Erfinder: SIEKMEYER, Gerd, 76131 Karlsruhe (DE)
(74) Vertreter: Müller-Boré & Partner Patentanwälte PartG mbB
(86) Internationale Anmeldenummer: PCT/EP2010/006393
(87) Internationale Veröffentlichungsnummer: WO 2011/047838

(56) Entgegenhaltungen:
- WO-A2-2006/058575
- DE-A1- 2 313 167
- DE-A1- 10 237 324
- US-A- 4 797 527
- US-A- 5 759 362

## Beschreibung

Die vorliegende Erfindung bezieht sich auf ein Verfahren zum Herstellen einer Elektrode und eine korrespondierende Elektrode für die elektrochemische Bearbeitung eines Werkstücks.

Ein derartiges Verfahren und eine derartige Vorrichtung ist aus DE 10237324 A1 bekannt, welches im Zusammenhang die Merkmale des Oberbegriffs des Anspruchs 1 und die Merkmale des Oberbegriffs des Anspruchs 8 offenbart.

Eine Elektrode für eine elektrochemische Bearbeitung (ECM = electrochemical machining) oder für einen sogenannten PECM Prozeß (precise electrochemical machining) hat eine strukturierte Form mit vorstehenden Elektroden und Gräben bzw. Nuten, um präzise Strukturen insbesondere Mikrostrukturen in Werkstücken herzustellen. Um ein hohes Aspektverhältnis zu erzielen, muß eine Seitenflanke der Elektrode elektrisch hochisoliert sein, während eine Vorderseite elektrisch leitend und chemisch beständig bzw. druckfest gestaltet sein muß, um lange Standzeiten der Elektrode zu erzielen.

US 4 797 527 A beschreibt eine Elektrode für eine Elektroentladungsbearbeitung und ein Verfahren zum Herstellen derselben. Die Elektrode wird dabei mit einem kristallinen Isolator beschichtet.

DE 102 37 324 A1 offenbart ein Verfahren zum Herstellen einer Elektrode für die elektrochemische Bearbeitung eines Werkstücks und eine nach dem Verfahren hergestellte Elektrode. Dabei wird eine Keramikschicht auf die Elektrode aufgebracht und durch Laserbearbeitung partiell entfernt, um eine Grabenstruktur auszubilden. Die Grabenstruktur wird später mit einem gut leitenden Werkstoff aufgefüllt.

Die Aufgabe der Erfindung besteht in der Schaffung eines neuartigen Verfahrens für die Herstellung einer Elektrode zur elektrochemischen Bearbeitung sowie in der Schaffung einer entsprechenden Elektrode.

Diese Aufgabe wird durch die Merkmale der unabhängigen Ansprüche erfüllt. Vorteilhafte Weiterbildungen der Erfindung sind in den abhängigen Ansprüchen definiert.

Ein Gesichtspunkt der Erfindung betrifft ein Verfahren zum Herstellen einer Elektrode für die elektrochemische Bearbeitung eines Werkstücks mit den Schritten:
Bereitstellen eines elektrisch leitenden Graphitsubstrats;
Auftragen zumindest einer Dünn-Schicht zumindest teilweise auf zumindest eine Oberfläche des Graphitsubstrats;
Ausbilden von Nuten vor dem Auftragen der Dünn-Schicht; und
mechanisches Abtragen der Dünn-Schicht an einem vorgegebenen Abschnitt des Graphitsubstrats, wobei der vorgegebene Abschnitt die Nuten nicht umfasst.

Indem das Substrat aus Graphit angewandt wird, ist eine entsprechende Struktur der Elektrode durch Fräsen und andere spanabhebende Fertigungsschritte auf einfache Weise möglich. In anderen Worten kann eine gewünschte Struktur der Elektrode durch Fräsen, Drehen, Bohren etc. auf einfache und kostengünstige Weise erzielt werden. Die Dünnschicht insbesondere aus Siliziumkarbid schafft eine entsprechende Isolationsschicht und verhindert mechanische Spannungen zwischen dem Substrat und der Isolationsschicht. In anderen Worten ist die Verträglichkeit eines Graphitsubstrats mit einer Siliziumkarbidschicht derart gut, daß im wesentlichen keine mechanischen Spannungen beispielsweise infolge von Temperaturschwankungen entstehen.

Alternativ kann jedoch auch eine Dünnschicht verwendet werden, die Siliziumnitrid oder einen Keramikwerkstoff, wie beispielsweise SiO₂, TaO₂, TiO₂, Al₂O₃, Ti₂O₃, aufweist. Weitere Alternativen bilden Einstoffsysteme wie Titandioxid oder Mehrstoffsysteme wie Bleizirkonattitanat (Piezokeramik), oder Dispersionskeramiken wie mit Zirkoniumoxid, verstärktes Aluminiumoxid (ZTA - Zirconia Toughened Aluminum Oxide) - Al₂O₃/ZrO₂.

Vorzugsweise wird ein Graphitsubstrat mit einer Pulverkörnung von etwa kleiner als 50 µm, am besten kleiner als etwa 30 µm verwendet. Insbesondere das Graphitsubstrat mit der geringen Pulverkörnung von kleiner als etwa 50 µm bzw. kleiner als etwa 30 µm läßt sich hervorragend und kostengünstig drehen, fräsen oder schleifen, um entsprechende Strukturen herzustellen.

Weiter bevorzugt wird die Siliziumkarbid-Schicht durch einen Beschichtungsprozess wie beispielsweise Physical Vapor Deposition (PVD), Chemical Vapor Deposition (CVD) oder Plasma Enhanced Chemical Vapor Deposition (PECVD) aufgetragen. Es kann jedoch auch ein Sol-Gel Prozess oder eine atmosphärische Plasmabeschichtung angewandt werden.

Vorzugsweise wird die Dünn-Schicht durch eine Diamantschicht verstärkt. Durch die Verstärkung der Siliziumkarbidschicht mittels einer Diamantschicht kann die Standfestigkeit bzw. Standzeit der Elektrode in dem ECM/PECM Prozeß weiter verbessert werden, insbesondere bei hohen Drücken und bei der Anwendung von agressiven chemischen Elektrolyten.

Vorzugsweise wird das mechanische Abtragen mittels Schleifen mit einer Diamantpaste durchgeführt. Durch die Entschichtung beispielsweise durch Schleifen mit einer Diamantpaste kann eine gezielte Entschichtung der Dünnschicht erfolgen, um vorgegebene Abschnitte der Elektrode leitfähig zu machen, während die beschichteten Abschnitte elektrisch isolierend sind.

Vorzugsweise wird eine Elektroden-Frontseite metallisch beschichtet. Eine Standzeit einer elektrisch leitenden Elektrodenfrontseite kann signifikant verlängert werden, wenn diese metallisch beschichtet wird.

Gemäß einem weiteren Gesichtspunkt der Erfindung wird eine Elektrode für eine elektrochemische Bearbeitung von Werksücken geschaffen, die mit einem elektrisch leitenden Graphitsubstrat versehen ist, das teilweise mit einer Dünn-Schicht beschichtet ist und an einem vorgegebenen Abschnitt des Graphitsubstrats nicht beschichtet ist, wobei die Elektrode mit der Dünn-Schicht beschichtete Nuten umfasst.

Vorzugsweise Elektrode weist das Graphitsubstrat eine Pulverkörnung von etwa kleiner als 50 µm auf, am besten kleiner als etwa 30 µm.

Weiter bevorzugt ist die Dünnschicht, insbesondere die Siliziumkarbid-Schicht, durch eine Diamantschicht verstärkt und/oder eine Elektroden-Frontseite ist metallisch beschichtet.

Die Erfindung wird nun anhand der beigefügten Zeichnungen und anhand eines Ausführungsbeispiels näher erläutert.
Fig. 1 zeigt ein Graphitsubstrat mit Nuten in einer perspektivischen Ansicht.
Fig. 2 zeigt das Graphitsubstrat von Fig. 1 nach dem Beschichten mit der Dünnschicht.
Fig. 3 zeigt das Graphitsubstrat von Fig. 2 nach dem Entschichten der Vorderseite.
Fig. 4 zeigt das Graphitsubstrat von Fig. 3 nach dem Beschichten der Vorderseite mit einer Metallschicht.

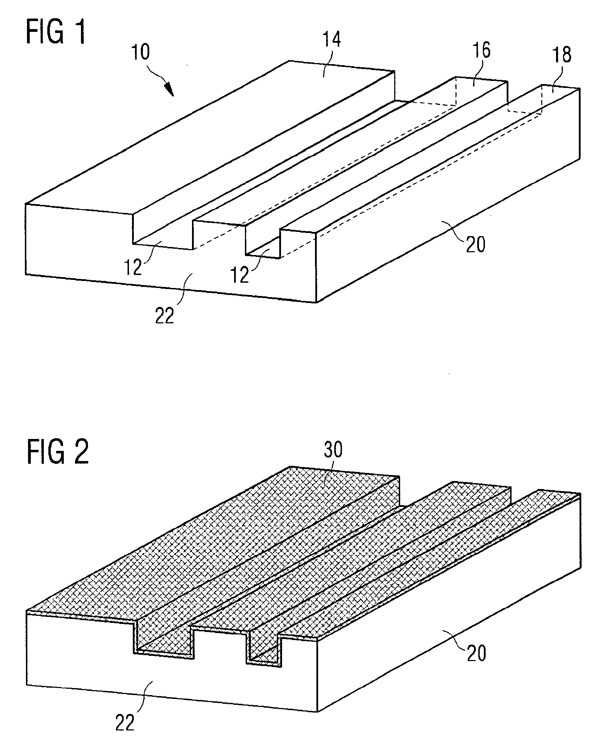

Fig. 1 zeigt ein Graphitsubstrat 10, in das bereits Nuten 12 beispielsweise mittels Fräsen eingearbeitet sind. Eine nach oben gerichtete Seite des Substrats 10 wird als eine Frontseite 14 bezeichnet, während hierzu im wesentlichen orthogonal gerichtete Seiten 20, 22 als Seitenflächen bezeichnet werden.

Wie des weiteren in Fig. 2 gezeigt ist, wird die Frontseite 14 des Graphitsubstrats 10 beispielsweise mittels physical vapor deposition PVD, chemical vapor deposition CVD, plasma enhanced CVD, einer atmosphärischen Plasmabeschichtung oder mittels eines Sol-Gel Prozesses mit einer Dünnschicht aus Siliziumkarbid, Siliziumnitrid oder einem Keramikwerkstoff, wie beispielsweise SiO₂, TaO₂, TiO₂, Al₂O₃, Ti₂O₃, beschichtet. Während dieses Beschichtungsprozesses werden die Seitenflächen 20, 22 bedeckt bzw. maskiert, um die Beschichtung lediglich an der Frontseite 14 einschließlich der Nuten 12 aufzutragen.

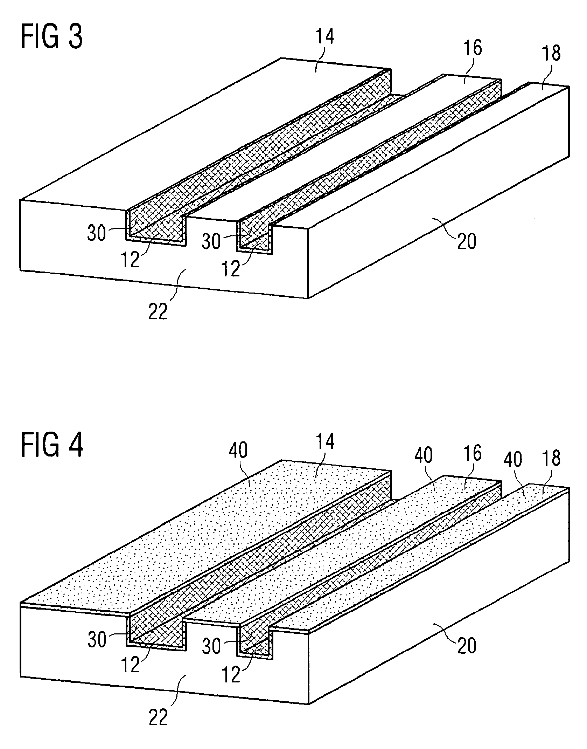

Als nächster Schritt erfolgt, wie in Fig. 3 gezeigt ist, eine gezielte Entschichtung der Frontseite 14 von der Dünnschicht, um die Frontseite wieder elektrisch leitend zu machen. Demgemäß verbleibt die Dünnschicht lediglich innerhalb den Nuten 12, während die Frontseite 14 entschichtet wird, um an der Frontseite 14 Elektroden 16, 18 zu bilden. In anderen Worten ist die dadurch gebildete Elektrode an den Seiten 16, 18 elektrisch leitend, um entsprechende Elektroden zu bilden, während die Nuten 12 durch die Beschichtung mit der Dünnschicht elektrisch isolierend sind. Durch diese Art der Beschichtung des Graphitsubstrats 10 mit der Dünnschicht 30 innerhalb der Nuten 12 wird ein hohes Aspektverhältnis erzielt. Demgemäß können insbesondere Mikrostrukturen mit sehr hoher Präzision bearbeitet werden.

Wie des weiteren in Fig. 4 gezeigt ist, können die Elektroden 16, 18 zusätzlich mit einer Metallschicht 40 versehen werden, um deren Standfestigkeit bzw. Standzeit weiter zu erhöhen. Vorzugsweise kann auch die Dünnschicht weiter verstärkt werden, indem diese des weiteren mit einer Diamantdünnschicht überzogen wird.

Die somit hergestellte Elektrode findet ihre Anwendung in einem ECM oder PECM Prozeß für eine elektrochemische Bearbeitung insbesondere von Strukturen wie beispielsweise Stents. Aufgrund des hohen Aspektverhältnisses können sehr präzise Mikrostrukturen mit dieser Elektrode geformt werden. Darüber hinaus kann die Elektrode sehr kostengünstig und einfach hergestellt werden, um die gesamten Fertigungskosten zu senken.

Es treten des weiteren aufgrund der Materialwahl eines Graphitsubstrats mit einem Siliziumkarbid im wesentlichen keine mechanischen Spannungen auf und die Standzeit der so gebildeten Elektrode ist sehr hoch. Des weiteren ist diese Elektrode insbesondere bei hohen Drücken und chemischen Elektrolyten sehr widerstandsfähig.

### Bezugszeichenliste

- 10: Graphitsubstrat
- 12: Nut
- 14: Frontseite
- 16: erste Elektrode
- 18: zweite Elektrode
- 20: Seitenfläche
- 22: Seitenfläche
- 30: Dünn-Schicht
- 40: Metallschicht

## Patentansprüche

1. Verfahren zum Herstellen einer Elektrode (16, 18) für die elektrochemische Bearbeitung eines Werkstücks mit den Schritten:
Bereitstellen eines elektrisch leitenden Graphitsubstrats (10);
Auftragen zumindest einer Dünn-Schicht (30) zumindest teilweise auf zumindest eine Oberfläche des Graphitsubstrats (10);
**gekennzeichnet durch**
Ausbilden von Nuten (12) vor dem Auftragen der Dünn-Schicht (30);
mechanisches Abtragen der Dünn-Schicht (30) an einem vorgegebenen Abschnitt des Graphitsubstrats (10), wobei der vorgegebene Abschnitt die Nuten (12) nicht umfasst.

2. Verfahren nach Anspruch 1, wobei die Dünn-Schicht (30) zumindest eines aus Siliziumkarbid, Siliziumnitrid oder einen Keramikwerkstoff aufweist, wobei der Keramikwerkstoff vorzugsweise zumindest eines aus SiO₂, TaO₂, TiO₂, Al₂O₃, Ti₂O₃, Titandioxid, Bleizirkonattitanat, oder Dispersionskeramiken wie mit Zirkoniumoxid, verstärktes Aluminiumoxid (ZTA - Zirconia Toughened Aluminum Oxide) - Al₂O₃/ZrO₂ aufweist.

3. Verfahren nach einem oder mehreren der vorherigen Ansprüche, wobei ein Graphitsubstrat (10) mit einer Pulverkörnung von etwa kleiner als 50 µm, am besten kleiner als etwa 30 µm verwendet wird.

4. Verfahren nach einem oder mehreren der vorherigen Ansprüche, wobei die Dünn-Schicht (30) durch einen Beschichtungsprozess wie beispielsweise Physical Vapor Deposition (PVD), Chemical Vapor Deposition (CVD), Plasma Enhanced Chemical Vapor Deposition (PECVD) oder einen Sol-Gel Prozess aufgetragen wird.

5. Verfahren nach einem oder mehreren der vorherigen Ansprüche, wobei die Dünn-Schicht (30) eine Siliziumkarbid-Schicht aufweist, die durch eine Diamantschicht verstärkt wird.

6. Verfahren nach einem oder mehreren der vorherigen Ansprüche, wobei das mechanische Abtragen mittels Schleifen mit einer Diamantpaste durchgeführt wird.

7. Verfahren nach einem oder mehreren der vorherigen Ansprüche, wobei eine Elektroden-Frontseite metallisch beschichtet wird.

8. Elektrode für eine elektrochemische Bearbeitung von Werksücken mit:
einem elektrisch leitenden Graphitsubstrat (10), das teilweise mit einer Dünn-Schicht (30) beschichtet ist und an einem vorgegebenen Abschnitt des Graphitsubstrats (10) nicht beschichtet ist,
**dadurch gekennzeichnet, dass**
die Elektrode mit der Dünn-Schicht (30) beschichtete Nuten (12) umfasst.

9. Elektrode nach Anspruch 8, wobei das Graphitsubstrat eine Pulverkörnung von etwa kleiner als 50 µm, am besten kleiner als etwa 30 µm aufweist.

10. Elektrode nach Anspruch 8 oder 9, wobei die Dünn-Schicht durch eine Diamantschicht verstärkt ist und/oder eine Elektroden-Frontseite metallisch beschichtet ist.

## Claims

1. Method for producing an electrode (16, 18) for the electrochemical machining of a workpiece comprising the steps of:
providing an electrically conducting graphite substrate (10);
applying at least one thin film (30) at least in part on at least one surface of the graphite substrate (10);
**characterized in** the
formation of grooves (12) before applying the thin film (30);
mechanical stripping of the thin film (30) at a predetermined section of the graphite substrate (10) wherein the predetermined section does not comprise the grooves (12).

2. Method according to claim 1, wherein the thin film (30) at least has one of silicon carbide, silicon nitride or a ceramic material, the ceramic material preferably having at least one of SiO₂, TaO₂, TiO₂, Al₂O₃, Ti₂O₃, titanium dioxide, lead zirconate titanate, or dispersion ceramics such as zirconia toughened aluminum oxide (ZTA) - Al₂O₃/ZrO₂.

3. Method according to one or several of the preceding claims, wherein a graphite substrate (10) with a powder grain size of smaller than 50µm, preferably smaller than about 30µm is used.

4. Method according to one or several of the preceding claims, wherein the thin film (30) is applied by means of a coating process such as physical vapor deposition (PVD), chemical vapor deposition (CVD), plasma enhanced chemical vapor deposition (PECVD) or a sol-gel process.

5. Method according to one or several of the preceding claims, wherein the thin film (30) has a silicon carbide layer which is strengthened by a diamond layer.

6. Method according to one or several of the preceding claims, wherein the mechanical stripping is carried out by means of grinding with a diamond paste.

7. Method according to one or several of the preceding claims, wherein one of the front walls of the electrode is being metallically coated.

8. Electrode for an electrochemical machining of workpieces with:
an electrically conducting graphite substrate (10) which is in part coated with a thin film (30) and is not coated on a predetermined section of the graphite substrate (10),
**characterized in that**
the electrode comprises grooves (12) coated with the thin film (30).

9. Electrode according to claim 8, wherein the graphite substrate has a powder grain size of smaller than 50µm, preferably smaller than about 30µm.

10. Electrode according to claim 9, wherein the thin film is strengthened by a diamond layer and/or one front wall of the electrode is metallically coated.

## Revendications

1. Procédé de fabrication d'une électrode (16, 18) pour l'usinage électrochimique d'une pièce à travailler avec les étapes :
mise à disposition d'un substrat en graphite électriquement conducteur (10) ;
application d'au moins une couche mince (30) au moins partiellement sur au moins une surface du substrat en graphite (10) ;
**caractérisé par**
la réalisation de rainures (12) avant l'application de la couche mince (30) ;
l'enlèvement mécanique de la couche mince (30) sur une section prédéfinie du substrat en graphite (10), dans lequel la section prédéfinie ne comprend pas les rainures (12).

2. Procédé selon la revendication 1, dans lequel la couche mince (30) présente au moins un élément parmi le carbure de silicium, le nitrure de silicium ou un matériau céramique, dans lequel le matériau céramique présente de préférence au moins un élément parmi SiO₂, TaO₂, TiO₂, Al₂O₃, Ti₂O₃, le dioxyde de titane, le titano-zirconate de plomb ou des céramiques de dispersion comme l'oxyde d'aluminium renforcé par de l'oxyde de zirconium (ZTA, oxyde d'aluminium renforcé par du zircone) - Al₂O₃/ZrO₂.

3. Procédé selon une ou plusieurs des revendications précédentes, dans lequel un substrat en graphite (10) avec une taille de particule de poudre inférieure à environ 50 µm, au mieux inférieure à environ 30 µm est utilisé.

4. Procédé selon une ou plusieurs des revendications précédentes, dans lequel la couche mince (30) est appliquée par un processus d'enduction comme par exemple le dépôt physique en phase vapeur (PVD), le dépôt chimique en phase vapeur (CVD), le dépôt chimique en phase vapeur assisté par plasma (PECVD) ou un processus sol-gel.

5. Procédé selon une ou plusieurs des revendications précédentes, dans lequel la couche mince (30) présente une couche de carbure de silicium qui est renforcée par une couche diamantée.

6. Procédé selon une ou plusieurs des revendications précédentes, dans lequel l'enlèvement mécanique est réalisé par meulage avec une pâte diamantée.

7. Procédé selon une ou plusieurs des revendications précédentes, dans lequel un côté avant d'électrode est enduit de manière métallique.

8. Electrode pour un usinage électrochimique de pièces à travailler avec :
un substrat en graphite électriquement conducteur (10) qui est enduit partiellement d'une couche mince (30) et n'est pas enduit sur une section prédéfinie du substrat en graphite (10),
**caractérisée en ce que**
l'électrode avec la couche mince (30) comprend des rainures enduites (12).

9. Electrode selon la revendication 8, dans laquelle le substrat en graphite présente une taille de particule de poudre inférieure à environ 50 µm, au mieux inférieure à environ 30 µm.

10. Electrode selon la revendication 8 ou 9, dans laquelle la couche mince est renforcée par une couche diamantée et/ou un côté avant d'électrode est enduit de manière métallique.
